# EUROPEAN PATENT APPLICATION

(11) **EP 4 810 997 A1**
(43) Date of publication of application: **23.09.2026**
(21) Application number: 26164588.1
(22) Date of filing: 13.03.2026
(51) Int. Cl.: G01S 13/86, B64C 27/00, G01S 13/88, G01S 13/89, G01S 13/935, G01S 17/86, G01S 17/875, G01S 17/89, G01S 17/933, G05D 1/00

(54) **METHOD AND SYSTEM FOR ENHANCED SITUATIONAL AWARENESS IN DEGRADED VISUAL ENVIRONMENT CONDITIONS**

(30) Priority: 17.03.2025 US 202563773007 P; 18.09.2025 US 202519333078
(71) Applicant: Honeywell International Inc., Charlotte, NC 28202 (US)
(72) Inventor: SAXENA, Sunit Kumar, Charlotte, 28202 (US); TYSON III, William, Charlotte, 28202 (US)
(74) Representative: Ingrassia, Fisher & Lorenz UK Ltd.

(57) **Abstract**

A degraded visual environment (DVE) mitigation system for a vehicle includes a DVE sensor, an actuator, and an actuator controller. The DVE sensor has a field-of-view and is configured to sense objects in the field-of-view and supply sensor data representative of the sensed objects. The actuator is coupled to the vehicle and to the DVE sensor. The actuator is coupled to receive actuator commands and is configured, in response to the actuator commands, to move the DVE sensor relative to the vehicle. The actuator controller is in operable communication with the actuator. The actuator controller is coupled to receive position commands from a user input and is configured, upon receipt of the position commands, to generate and supply the actuator commands to the actuator.

## Description

### CROSS REFERENCE TO RELATED APPLICATION

The present application claims benefit of prior filed U.S. Provisional Patent Application No. 63/773,007, filed March 17, 2025, which is hereby incorporated by reference herein in its entirety.

### TECHNICAL FIELD

The present disclosure generally relates to aircraft operations in degraded visual environment conditions, and more specifically to a system and method for enhanced situational awareness in degraded visual environment conditions.

### BACKGROUND

Various environmental and weather conditions, such as clouds, rain, snow, fog, dust, sand, smoke, smog, flat light, brownouts, whiteouts, and blackouts, may cause a pilot's vision to be limited. These conditions, which are generally referred to as Degraded Visual Environment (DVE), can significantly impact the ability of the pilot to operate the aircraft, especially during take-off and landing operations. Although various DVE systems have been developed, the current systems exhibit certain drawbacks. For example, the current solutions are limited in directionality. That is, typically providing sensing capability in a singled direction - the forward-facing direction. This limits the situational awareness of the pilot to that single direction.

Hence, there is a need for a DVE solution that is not limited to providing aircraft pilots situational awareness in a single, fixed direction. The present disclosure addresses at least this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, a degraded visual environment (DVE) mitigation system for a vehicle includes a DVE sensor, an actuator, and an actuator controller. The DVE sensor has a field-of-view, and is configured to sense objects in the field-of-view and supply sensor data representative of the sensed objects. The actuator is coupled to the vehicle and to the DVE sensor. The actuator is coupled to receive actuator commands and is configured, in response to the actuator commands, to move the DVE sensor relative to the vehicle. The actuator controller is in operable communication with the actuator. The actuator controller is coupled to receive position commands from a user input and is configured, upon receipt of the position commands, to generate and supply the actuator commands to the actuator.

In another embodiment, a degraded visual environment mitigation system for a vehicle includes a DVE sensor, an actuator, an actuator controller, and a processing system. The DVE sensor has a field-of-view that is adjustable. The DVE sensor is additionally coupled to receive field-of-view adjustment commands and is configured, in response thereto, to adjust the field-of-view. The DVE sensor is further configured to sense objects in the field-of-view and supply sensor data representative of the sensed objects. The actuator is coupled to the vehicle and to the DVE sensor. The actuator is coupled to receive actuator commands and configured, in response to the actuator commands, to move the DVE sensor relative to the vehicle. The actuator controller is in operable communication with actuator. The actuator controller is coupled to receive position commands from a user input and is configured, upon receipt of the position commands, to generate and supply the actuator commands to the actuator. The processing system is in operable communication with the DVE sensor and is adapted to receive vehicle speed data, vehicle attitude data, vehicle altitude data, and actuator orientation data. The processing system is configured to supply the field-of-view commands to the DVE sensor based at least in part on the vehicle speed data, vehicle attitude data, vehicle altitude data, and actuator orientation data.

In yet another embodiment, a degraded visual environment mitigation system for a vehicle includes a vehicle lighting assembly, a DVE sensor, an actuator, and an actuator controller. The vehicle lighting assembly includes a vehicle light mounted on or within a housing assembly. The DVE sensor is mounted on or within the housing assembly and has a field-of-view. The DVE sensor is configured to sense objects in the field-of-view and supply sensor data representative of the sensed objects. The actuator is coupled to the vehicle and to the DVE sensor. The actuator is coupled to receive actuator commands and is configured, in response to the actuator commands, to move the DVE sensor relative to the vehicle. The actuator controller is in operable communication with actuator. The actuator controller is coupled to receive position commands from a user input and is configured, upon receipt of the position commands, to generate and supply the actuator commands to the actuator. The actuator is configured to move the DVE sensor to move the DVE sensor relative to the vehicle.

Furthermore, other desirable features and characteristics of the DVE system will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 depicts a functional schematic diagram of one embodiment of degraded visual environment (DVE) mitigation system for a vehicle; and
FIG. 2 depicts one embodiment of a vehicle that may include the system of FIG. 1;
FIG. 3 depicts one example of potential housing of a DVE sensor used in the system of FIG. 1; and
FIG. 4 depicts a schematic representation of the DVE sensor, illustrating an adjustable field-of-view.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

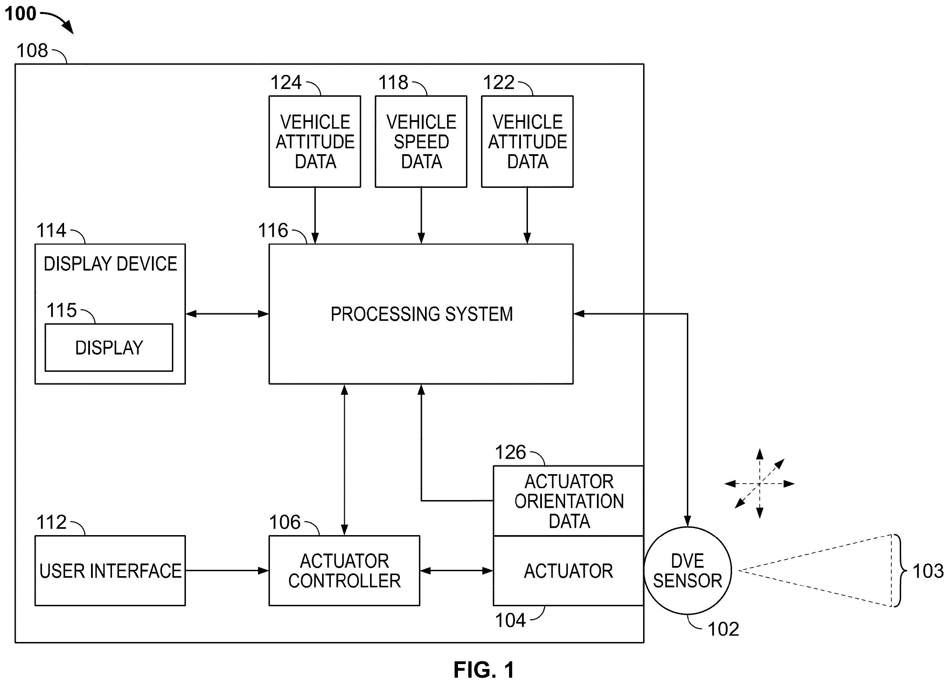

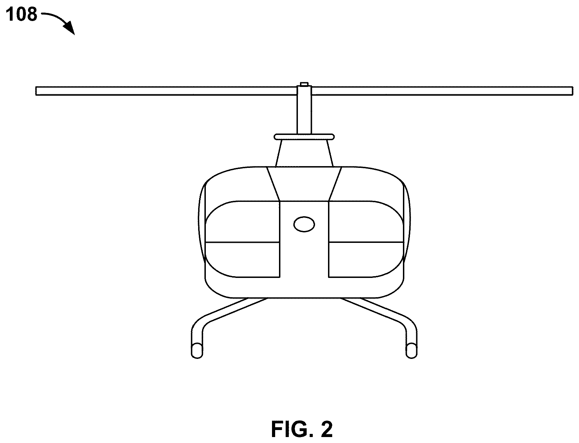

Referring to FIG. 1, a functional schematic diagram of one embodiment of a degraded visual environment (DVE) mitigation system for a vehicle is depicted. The system 100, at least in the depicted embodiment, includes a DVE sensor 102, an actuator 104, and an actuator controller 106, all of which are disposed on or within a vehicle 108. Before proceeding further, it is noted that the vehicle 108 may be any one of numerous types of land vehicles, marine vehicles, or air vehicles. In one particular embodiment, the vehicle is an aircraft, such as the example rotorcraft 108 depicted in FIG. 2.

Returning to FIG. 1, no matter what type of vehicle 108 is used, the DVE sensor 102 has a field-of-view (FOV) 103 and may be implemented using any one of numerous suitable sensors. For example, the DVE sensor 102 may be implemented using a millimeter Wave (mmW) radar sensor, a light detection and ranging (LiDAR) sensor, a camera, or a thermal sensor, just to name a few. In a particular preferred embodiment, it is implemented using a mmW radar sensor. Regardless of how it is specifically implemented, the DVE sensor 102 is configured, as is generally known, to sense objects in the FOV 103 and supply sensor data representative of the sensed objects.

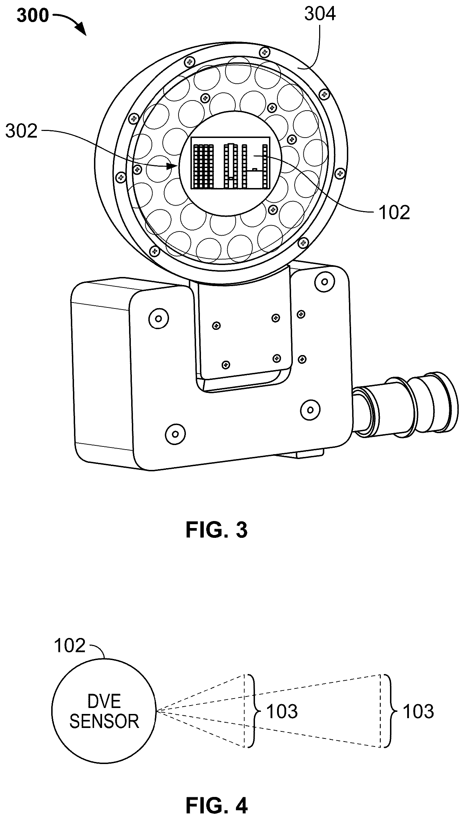

The DVE sensor 102 may be implemented as a standalone device or as part of another device that is already installed on the vehicle 108. For example, in one embodiment, which is depicted in FIG. 3, the DVE sensor 102 is integrated in a vehicle lighting assembly 300. The depicted vehicle lighting assembly 300 includes a vehicle light 302 that is mounted on or within a housing assembly 304, and the DVE sensor 102 is also mounted on or within the housing assembly 304.

The actuator 104 is coupled to the vehicle 108 and to the DVE sensor 102. The actuator 104 is coupled to receive actuator commands and is configured, in response to the actuator commands, to move the DVE sensor 102 relative to the vehicle 108. It will be appreciated that the actuator 104 may be implemented using any one of numerous known types of actuators, including various electrical, mechanical, electromechanical, pneumatic, and hydraulic actuators. In one particular embodiment, the actuator 104 is implemented using an electromechanical actuator that includes one or more actuator motors. It will additionally be appreciated that the actuator 104 may be configured to move the DVE 102 in various directions. Preferably, however, the actuator 104 is configured to move the DVE sensor, relative to the vehicle, in one or more rotational axes. In this regard, the actuator may be configured as just a yaw actuator to provide rotational motion only, or as a 2-axis actuator (such as extend/retract and rotate) or a 3-axis orthogonal gimbal actuator arrangement (such as 90-degree extend/retract along a longitudinal axis and rotation (yaw) and pitch (up/down).

The actuator controller 106 is in operable communication with the actuator 104. The actuator controller 106 is coupled to receive position commands from a user interface 112 and is configured, upon receipt of the position commands, to generate and supply the actuator commands to the actuator 104. It will be appreciated that the user interface 112 may be implemented using various types of devices, such as a keypad, touchpad, keyboard, mouse, touch panel (or touchscreen), joystick, knob, line select key, or another suitable device adapted to receive input from a user, such as an audio input device including, for example, a microphone, audio transducer, audio sensor, or the like.

As FIG. 1, further depicts, the system 100 may additionally include a display device 114 and a processing system 116. The display device 114 is responsive to image rendering display commands to display one or more images on a display 115. The display device 114 may be implemented using any one of numerous types of head-down display devices, head-up display devices, user-worn display devices, or portable display devices, just to name a few non-limiting examples.

The processing system 116 is in operable communication with at least the DVE sensor 102 and the display device 114. The processing system 116 is coupled to receive the sensor data supplied from the DVE sensor 102 and is configured, upon receipt of the sensor data, to process the sensor data and supply image rendering display commands to the display device 114 that cause the display device 114 to render one or more images on the display 115 that include at least the sensed objects. It will be appreciated that in some embodiments, the processing system 116 may be additionally configured to supply the position commands to the actuator controller 104.

It will be appreciated that the processing system 116 may include one or more processors and computer-readable storage devices or media encoded with programming instructions for configuring the processing system 116. The one or more processors may be any custom-made or commercially available processor, a central processing unit (CPU), a graphics processing unit (GPU), an application specific integrated circuit (ASIC), a field programmable gate array (FPGA), an auxiliary processor among several processors associated with the controller, a semiconductor-based microprocessor (in the form of a microchip or chip set), any combination thereof, or generally any device for executing instructions.

The computer readable storage devices or media may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable programming instructions, used by the one or more processors.

In some embodiments, and as FIG. 4 depicts, the FOV 103 of the DVE sensor 102 is adjustable. It will be appreciated that the FOV 103 is, in some embodiments, manually adjustable. In other embodiments, the FOV 103 is automatically adjustable. In still other embodiments, the FOV 103 may be both manually and automatically adjustable. When the FOV 103 is manually adjustable, the adjustment is implemented using a user interface, which may be, for example, the above-described user interface 112.

When the FOV 103 is automatically adjusted, the DVE sensor 102 is coupled to receive field-of-view adjustment commands and is configured, in response thereto, to adjust the field-of-view. In one particular embodiment, the processing system 116 is configured to supply the field-of-view commands to the DVE sensor 102. In this embodiment, the processing system may be configured to supply the field-of-view commands to the DVE sensor 102 based at least in part on one or more vehicle conditions, such as vehicle speed data, vehicle attitude data, vehicle altitude data, and actuator orientation data. As may be appreciated, the processing system 116, in such embodiments, is coupled to receive vehicle speed data, vehicle attitude data, vehicle altitude data, and actuator orientation data from, for example, a vehicle speed data source 118, a vehicle altitude data source 122, a vehicle attitude data source 124, and an actuator orientation data source 126, respectively.

As may be appreciated, the FOV 103 of the DVE sensor 102 may be adjusted to a relatively narrow FOV setting, which will provide relatively long range (e.g., 500 feet) and low-resolution coverage, at relatively high-speed, high-altitude operations. Conversely, the FOV 103 of the DVE sensor 102 may be adjusted to a relatively wide FOV setting, which will provide relatively short range (e.g., 200 feet) and high-resolution coverage, at relatively low-speed, low-altitude operations.

The DVE system disclosed herein is not limited to providing aircraft pilots situational awareness in a single, fixed direction. A degraded visual environment mitigation (DVEM) system is disclosed herein that provides pilots control over the DVEM system. In particular, the system allows a pilot to steer around and look around the DVE and help pilot navigate through the DVE safely. The proposed DVEM solution includes a DVE sensor, such as mmW Radar, mounted on a steerable platform, such as a movable searchlight, instead of static, fixed installation. The actuator 104, to which the DVE sensor 102 is coupled, is mapped (e.g., calibrated) with respect to the aircraft reference frame. As such, the current position of the actuator 104, and thus the DVE sensor 102, can be supplied to the pilot via (for example) the actuator orientation data source 126, processing system 116, and display device 114. This allows the pilot to know the direction the DVE sensor 102 is pointing with respect to the aircraft reference frame. So, for example, if the aircraft 108 is heading north and the DVE sensor 102 is pointed eastward, this mapping/calibration ensures the pilot is informed of the actual position/orientation (e.g., eastward) of the DVE sensor 102.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A degraded visual environment mitigation system for a vehicle, comprising:
a degraded visual environment (DVE) sensor having a field-of-view, the DVE sensor configured to sense objects in the field-of-view through the DVE, and supply sensor data representative of the sensed objects;
an actuator coupled to the vehicle and to the DVE sensor, the actuator coupled to receive actuator commands and configured, in response to the actuator commands, to move the DVE sensor relative to the vehicle; and
an actuator controller in operable communication with actuator, the actuator controller coupled to receive position commands from a user input and configured, upon receipt of the position commands, to generate and supply the actuator commands to the actuator.

2. The system of claim 1, wherein the actuator is configured to move DVE sensor in one or more axes of rotation.

3. The system of claim 1, wherein:
the vehicle has a frame of reference;
the actuator is calibrated relative to the vehicle frame of reference,
whereby an actual direction which the DVE sensor is pointing with respect to the vehicle frame of reference may be known.

4. The system of claim 1, further comprising:
a display device responsive to image rendering display commands to display one or more images; and
a processing system coupled to receive the sensor data supplied from the DVE sensor, the processing system configured, upon receipt of the sensor data, to process the sensor data and supply image rendering display commands that cause the display device to render an image that includes at least the sensed objects.

5. The system of claim 1, wherein the field-of-view is adjustable.

6. The system of claim 5, wherein the field-of-view is manually adjustable via a user interface.

7. The system of claim 5, wherein:
the DVE sensor is coupled to receive field-of-view adjustment commands and is configured, in response thereto, to adjust the field-of-view.

8. The system of claim 7, further comprising:
a processing system in operable communication with the DVE sensor and configured to supply the field-of-view commands to the DVE sensor.

9. The system of claim 8, wherein:
the processing system is adapted to receive vehicle speed data, vehicle attitude data, vehicle altitude data, and actuator orientation data;
the processing system is configured to supply the field-of-view commands to the DVE sensor based at least in part the vehicle speed data, vehicle attitude data, vehicle altitude data and actuator orientation data.

10. The system of claim 1, further comprising:
a vehicle lighting assembly, the vehicle lighting assembly including a vehicle light mounted on or within a housing assembly,
wherein the DVE sensor is mounted on or within the housing assembly.

11. The system of claim 1, wherein the vehicle is an aircraft.

12. The system of claim 11, wherein the aircraft is a rotorcraft.
